Europäisches Patentamt
European Patent Office
Office européen des brevets

(19)

(11) Publication number: **0 171 858**
**A2**

(12) # EUROPEAN PATENT APPLICATION

(21) Application number: 85201283.0

(22) Date of filing: 08.08.85

(51) Int. Cl.⁴: C 01 B 31/36

(30) Priority: 14.08.84 US 640496

(43) Date of publication of application: 19.02.86 Bulletin 86/8

(84) Designated Contracting States: AT BE CH DE FR GB IT LI LU NL SE


(71) Applicant: AGIP S.p.A.
Corso Venezia 16
I-20121 Milano(IT)

(71) Applicant: ANIC S.p.A.
Via Ruggero Settimo, 55
I-90139 Palermo(IT)

(72) Inventor: Sanjurjo, Angel
15010 Penitencia CK Rd.
San Jose Ca 95132(US)

(72) Inventor: Sancier, Kenneth M.
561 Berkeley Avenue
Menlo Park Ca 94025(US)

(72) Inventor: Allam, Ibrahim M.
P.O. Box 1593, UPM
Dhahran 31261(SA)

(74) Representative: Roggero, Sergio et al,
Ing. Barzanò & Zanardo Milano S.p.A. Via Borgonuovo 10
I-20121 Milano(IT)


(54) **Method of making silicon carbide and coatings of silicon carbide on carbonaceous substrates.**


(57) A process is disclosed for making silicon carbide by reacting silicon or a silicon precursor with a carbonaceous material in the presence of an inorganic fluoride.


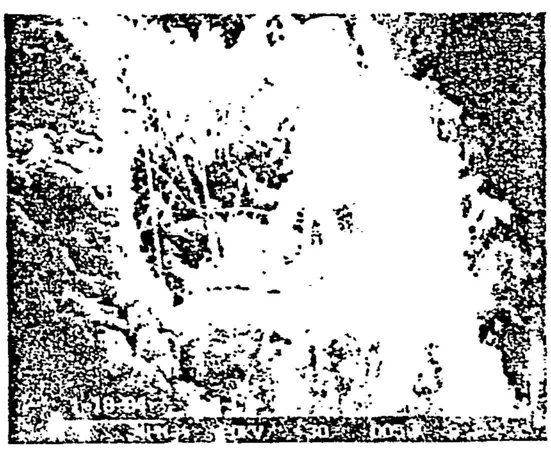

FIG. 1

EP 0 171 858 A2

Croydon Printing Company Ltd

# METHOD OF MAKING SILICON CARBIDE AND COATINGS OF SILICON CARBIDE ON CARBONACEOUS SUBSTRATES

## BACKGROUND OF THE INVENTION

Silicon carbide is prepared commercially by the reaction of silicon dioxide with coke in an electric furnace at about 1800°C. The reaction may be written as follows:

$$SiO_2 + 3C \longrightarrow SiC + 2CO$$

It is also known that elemental silicon can be directly reacted with carbon to form silicon carbide at temperatures in the order of about 1400°C. Other methods for forming silicon carbide include the pyrolysis of compounds containing silica and carbon. The pyrolitic technique may be used with trichloromethyl silane vapor and hydrogen or a mixture of silicon tetrachloride vapor and a suitable hydrocarbon vapor, such as toluene, and hydrogen are introduced into an argon plasma between concentric electrodes. In the hot plasma the compounds decompose into elements that upon cooling form the most stable species, i.e., silicon carbide and hydrochloric acid. Coatings of silicon carbide have been deposited on substrates using various vapor phase deposition techniques.

The applicants have discovered that silicon and a carbonaceous material may be directly reacted in the presence of an inorganic fluoride salt at temperatures below those required if the salt were not present. Depending on the length of time that the reaction is run and the nature of the carbonaceous substrate, a silicon carbide product or silicon carbide coating may be obtained. In addition, SiC whiskers and fibers can be grown by using this invention.

Accordingly, it is a primary object of this invention to provide a novel process for making silicon carbide.

It is also an object of this invention to provide a novel process for forming a silicon carbide coating on a carbonaceous substrate.

It is also an object of this invention to provide a novel process for forming a silicon carbide coating on a carbon fiber or a carbon foil to modify the chemical, mechanical or electrical properties of said fiber or foil.

It is also an object of this invention to provide a novel process to form carbides of other elements such as B, Ti, Zr, and other transition metals.

These and other objects of the invention will become apparent from a preview of the specifications herein.

BRIEF DESCRIPTION OF THE DRAWINGS

FIG. 1 is a photomicrograph of silicon carbide formed according to Example 1.

FIG. 2 is a photomicrograph of silicon carbide formed according to Example 2.

## DETAILED DESCRIPTION OF THE INVENTION

The applicants' process for the production of silicon carbide comprises:

(a) forming a reaction mixture which comprises a carbon source, a silicon source, and at least one inorganic fluoride salt; and

(b) heating said reaction mixture for a sufficient time at an elevated temperature to cause silicon carbide to form.

When the process is used to place a layer of silicon carbide on a carbonaceous article, the carbonaceous article forms a part of the reaction mixture as it is the substrate for the formation of the layer of silicon carbide.

The carbonaceous substrate may comprise graphite, articles such as rods, vessels and the like, carbon fibers, such as graphite fibers, graphite foil, graphite felt, coke, carbon sponge, glassy carbon, charcoal, etc. By selection of the appropriate size of the carbonaceous substrate and using the proper conditions of temperature, pressure and time, complete conversion of the carbonaceous substrate to silicon carbide may be effected.

When a silicon carbide coating is formed on a graphite substrate it strengthens the substrate particularly in the case of graphite fibers, felts and foils.

The process requires the presence of a source of silicon, either as elemental silicon or a compound that is capable of liberating elemental silicon under the conditions of the reaction or in the presence of a

compound that reacts with the silicon precursor to form elemental silicon. The silicon precursors include silicon dioxide (silica) which will form silicon under the reaction condition or a silicon tetrahalide such as silicon tetrafluoride which may be reduced by an alkali metal, such as sodium to form elemental silicon, or a silane, organosilane, or mixtures thereof.

The inorganic fluoride compound may be sodium fluoride, potassium fluoride, lithium fluoride, barium fluoride, calcium fluoride, strontium fluoride, magnesium fluoride, aluminum fluoride, copper fluoride, lead difluoride, fluorosilicates, fluoroborates and mixtures thereof. Sodium fluoride is the preferred inorganic fluoride. If mixtures are used, it is advantageous to select those inorganic fluorides that will form a eutectic and permit the use of lower reaction temperatures. For example a mixture of equal parts of lithium fluoride, sodium fluoride and potassium fluoride form a eutectic that melts around 750°C. It is also contemplated that non-fluoride salts may be employed as diluents for the inorganic fluoride salts.

Generally it is feasible to employ temperatures that range from about the melting point of the fluoride (or a eutectic containing a fluoride) up to about 1600°C, or preferably from about 750°C to about 1300°C and more preferably from about 1100°C to about 1200°C. The reaction may be carried out for a sufficient period of time to achieve the desired results. This time may be from 1 minute to 168 hours, depending on pressure, density of the substrate and temperature. The process may be carried out at ambient pressure or if desired a vacuum as low as 1 mm Hg may be applied. Alternatively, the process may be carried out under a pressure of up to 100 atmospheres.

Coatings of a thickness of about 0.1 to about 20 microns may be applied to high density graphite and from about 5 to 50 microns in thickness may be formed on low density graphite. The term high density as applied to graphite herein is used to describe graphite having a density of 1.9 g/cc and above. The term low density as applied to graphite herein is used to describe graphite having a density of from about 1.5 g/cc to about 1.9 g/cc.

The relative proportions of the reactants are not critical. Generally, it is preferred to use an excess of silicon or silicon precursor required to make the desired quantity of silicon carbide with from 0.25 to 20:1 weight ratio of the inorganic fluoride based on the amount of silicon. Depending on the temperature of operation, Si or F species can be preferentially lost by volatilization. The initial relative proportion should be tailored to maintain enough of other materials during the heat treatment.

When silicon carbide granules or particles are to be made, the use of classified sizes of carbonaceous particles such as graphite may be utilized to obtain silicon carbide of a predetermined size. This method can be utilized to avoid the need to fracture and classify the silicon carbide product for use as abrasive particles or for use in making sintered silicon carbide articles.

## DESCRIPTION OF THE PREFERRED EMBODIMENT

The following examples are added to illustrate but not to limit the invention.

## EXAMPLE 1

The first series of studies was made by placing samples of the material to be studied along with the synthetic RP in cylindrical holes (1 cm-ID x 2 cm deep) cut in a graphite block. Cylindrical caps of graphite were then placed on top of the holes to decrease vaporization. This block was then heated to about 1100°C in argon. After heating for about 1 hour, most of the NaF in the sample hole had disappeared. It seemed that the loss of NaF was due to vaporization

Table 1

GRAPHITE IN Si-NaF MIXTURES

HEATED IN ARGON AT 1100°C FOR 1 HOUR

| Si:NaF Ratio | Material[a] | Results |
|---|---|---|
| 1:1 | Graphite (1.4 g/cc) | Material coated with a SiC layer |
| 1:2 | Graphite (1.4 g/cc) | Material coated with a SiC layer |
| 1:6 | Graphite (1.4 g/cc) | Material coated with a SiC layer |
| 0:1* | Graphite (1.4 g/cc) | No visible effect |
| 1:6 | Spectroscopic Graphite | Material coated with a SiC layer |
| 1:6 | Glassy Carbon Sponge | Material coated with a SiC layer |
| 1:6 | SiC Single Crystal | Unattacked |
| 1:6 | Blank | |

*Control

## EXAMPLE 2

Graphite samples were placed in a graphite block with 2 cm-ID holes with tight-fitting caps for the top of the holes. The samples of graphite materials were again heated in graphite block at 1170°C for 35 hours. The most relevant conditions and results of this experiment are summarized in Table 2. Vaporization losses were significant.

Table 2

STABILITY TEST OF DIFFERENT GRAPHITE SAMPLES IN Si-NaF MIXTURES HEATED IN ARGON AT 1170°C FOR 35 HOURS

| Si:NaF Ratio | Sample Material | Results |
|---|---|---|
| 1:6 | Graphite AXM-5Q ) HPD-3 ) | SiC coating on graphite |
| 1:6 | | SiC coating on graphite |
| 0:1 | | Unattacked |
| 1:2 | Graphite AXM-5Q | SiC coating on graphite |

EXAMPLE 3

A graphite bar was provided with five compartments (1.8 cm diameter), 4 of which were fitted with plugs and one with a threaded cap. In each compartment we loaded first graphite sample, and then we filled it with a Si:NaF powder mixture. The following table describes the weight, and the type of graphite rod in each compartment in each run.

| Compartment | A | B | C | D | E |
|---|---|---|---|---|---|
| Run 1 | 0.35846 | 0.33892 | 0.43424 | 0.44394 | 0.32857 |
| Run 2 | 0.35794 | 0.39425 | 0.21787 | 0.48801 | 0.54793 |
| Run 3 | 0.23810 | 0.20584 | 0.17289 | 0.19907 | 0.19546 |

Run 1 used Poco graphite HPD-3 in the form of a shaped rod having a density of about 1.9 $g/cm^3$; Run 2 used Poco graphite AXM-5Q in the form of a shaped rod having a density of about 1.77 $g/cm^3$; and Run 3 used Poco graphite AXZ-5Q in the form of a shaped rod having a density of about 1.57 $g/cm^3$.

Compartment A also contained a 2:1 mixture of sodium fluoride to silicon; Compartment B contained a 1:0 ratio of sodium fluoride to silicon; Compartment C contained a 6:1 ratio of sodium fluoride to silicon; Compartment D contained a 2:1 ratio of sodium fluoride to silicon; and Compartment E contained a 6:1 ratio of sodium fluoride to silicon. The silicon was 99.99% pure (Ventron) and the sodium fluoride was reagant grade (Baker).

The plugs were fitted into the graphite block and the whole assembly was heated at a temperature of 1130°C for 155 hours in an argon atmosphere at atmospheric pressure. The graphite block was opened and it was found that silicon carbide had formed.

The two major parameters studied were Si:NaF ratios and graphite density. The conditions and results of this experiment are summarized in Table 3. After this heat treatment, the graphite samples were recovered, mounted in an epoxy resin, and polished. Cross sections of the exposed graphite samples were also studied by Scanning Electron Microscopy (SEM) and X-rays fluorescence (XRF). We found that for 1.90 gr/cc graphite samples, the thickness of the SiC layer was greater in samples that were treated in Si:NaF mixtures rich in NaF. The SiC coating was compact and thin (5-10 um) for this high density graphite. For lower density graphites, the XRF Si signal could be detected inside of the graphite hundreds of microns from the surface.

## Table 3

**STABILITY TESTS DIFFERENT GRAPHITE SAMPLES IN Si-NaF MIXTURES HEATED IN ARGON AT 1130°C FOR 155 HOURS**

| Si:NaF Ratio | Graphite Density (gr/cc)[a] | Results |
|---|---|---|
| 1:2 | 1.90 | SiC coating |
| | 1.77 | SiC coating |
| | 1.57 | SiC coating |
| 0:1 | 1.90 | No attack |
| | 1.77 | No attack |
| | 1.57 | No attack |
| 1:6 | 1.90 | SiC coating |
| | 1.77 | SiC coating |
| | 1.57 | SiC coating |
| 1:2 | 1.90 | SiC coating |
| | 1.77 | SiC coating |
| | 1.57 | SiC coating |
| 1:6 | 1.90 | SiC coating |
| 1.77:1 | 1.77 | SiC coating |
| | 1.57 | SiC coating |

[a] HPD-3; = 1.90 $g/cm^3$
AXM-5Q; = 1.77 $g/cm^3$
AX7-5Q; = 1.57 $g/cm^3$

Based on this work we postulate that:

(1) at temperatures above the melting point of NaF, there exist several vaporization equilibrium including

$$NaF(\ ) \quad NaF(g) \qquad (1)$$

$$Si(c) + NaF(\ ) \quad SiF_4(g) + 4Na(g) \qquad (2)$$

$$Si + \frac{(x)}{(4-x)} SiF_4 \quad \frac{4}{4-x} SiF_x \ (1 \quad x \quad 3) \qquad (3)$$

All of these equilibriums contribute to weight losses of the Si + NaF load.

(2) The silicon species produced in equilibrium (2) and (3) can react with carbon to produce SiC according to the equilibrium:

$$SiF_x\ (g) + \left(1+\frac{x}{4}\right) C(s) \qquad SiC\ (c) + \frac{x}{4} CF_4(g) \quad (1 \quad x \quad 4) \qquad (4)$$

Although $CF_y$ (1 y 4) species can also exist.

(3) Because X-ray fluorescence indicates that in porous graphite, silicon species were found inside the graphite, we concluded that the most probable mechanism to form SiC is through equilibrium (4).

(4) The major conclusion from this work is that the reaction products do not appear to alter the mechanical properties of the graphite. It was shown that under the above conditions, a thin layer of SiC is formed on the surface of the graphite, as determined by SEM, XRF, and X-ray analysis. This layer is adherent and compact for graphites with densities above 1.7 g/cc, and the SiC does not penetrate into the graphite. SiC coatings also were formed on lower density graphite (1.5 g/cc), but the SiC also entered into the bulk of the graphite. X-ray fluorescence analysis shows that sodium species were present neither in the bulk of the graphite nor in the SiC coating.

CLAIMS

1. A process for the production of silicon carbide said process comprising:

(a) forming a reaction mixture of which at elevated temperature will comprise a carbon source; a silicon source; and at least one inorganic fluoride salt;

(b) heating said reaction mixture for a sufficient time at an elevated temperature to cause silicon carbide to form; and

(c) recovering silicon carbide from the reaction mixture.

2. A process for the production of silicon carbide as defined in claim 1 wherein the carbonaceous substrate is graphite.

3. A process for the production of silicon carbide as defined in claim 1 wherein a coating of silicon carbide is formed on a carbonaceous substrate.

4. A process for the production of silicon carbide wherein a shaped carbonaceous substrate is substantially completed converted to silicon carbide.

5. A process for the production of silicon carbide as defined in claims 3 or 4 wherein the silicon source is elemental silicon.

6. A process for the production of silicon carbide as defined in claim 5 wherein the inorganic fluoride is selected from the group consisting of sodium fluoride, potassium fluoride and lithium fluoride.

7. A process for the production of silicon carbide as defined in claim 5 wherein a temperature from the melting point of the inorganic fluoride or a eutectic containing a fluoride up to about 1600°C.

8. A process as defined in claim 7 wherein a temperature of from about 750°C to about 1300°C is utilized.

9. A process as defined in claim 7 wherein a temperature of from about 1110°C to about 1200°C is utilized.

10. A process as defined in claim 5 wherein the carbonaceous source is carbon fiber.

11. A process as defined in claim 5 wherein the carbon source is graphite.

12. A process as defined in claim 5 wherein the carbon source is a carbon sponge.

13. A process as defined in claim 5 wherein the carbon source is graphite felt.

14. A process as defined in claim 5 wherein the carbon source is graphite foil.

15. A process as defined in claims 1, 3, 4 or 5 where a transition metal, or a metal from the La series (4f) or Ac series (5f) is used.

16. A process as defined in claim 15 where a Ti source is used instead of the Si source.

17. A process as defined in claim 15 where a Zr source is used instead of the Si Source.

18. A process as defined in claim 15 where a W source is used instead of the Si source.

19. A process as defined in claims 1, 3, 4, or 5 where a B source is used instead of the Si source.

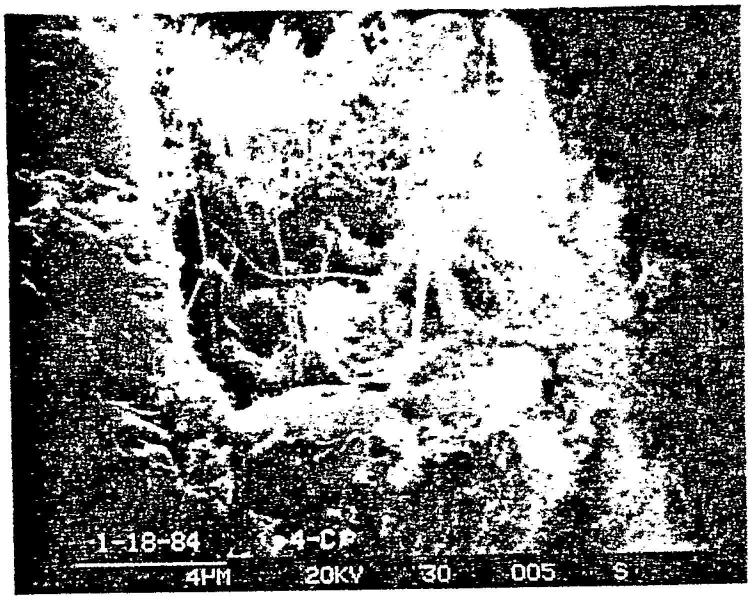


FIG. 1

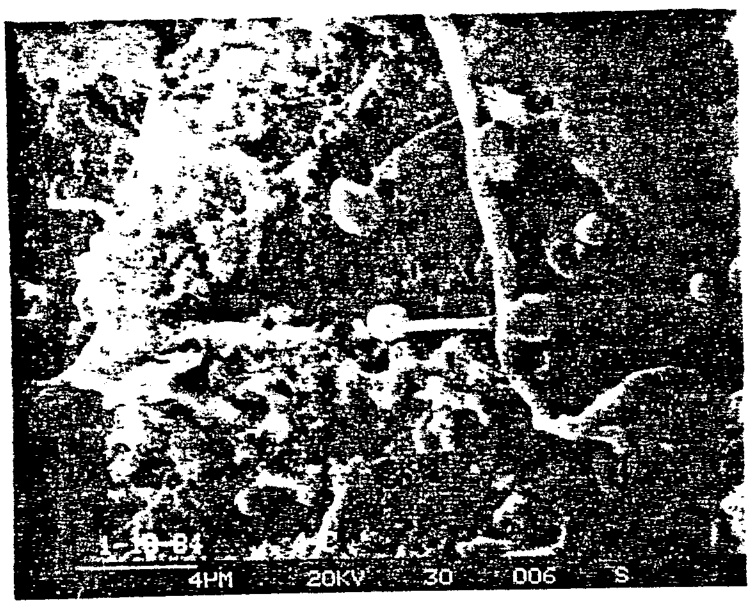


FIG. 2